# EUROPEAN PATENT APPLICATION

(11) **EP 1 695 806 A1**
(43) Date of publication of application: **30.08.2006**
(21) Application number: 03778856.9
(22) Date of filing: 12.12.2003
(51) Int. Cl.: B29C 39/10, B22C 9/04

(54) **METHOD FOR MANUFACTURING HOLLOW MODEL**

(71) Applicant: Shonan Design Co., Ltd., Sagamihara-shi, Kanagawa-ken 2291132 (JP); Oi, Takaharu, Sagamihara-shi, Kanagawa 229-1132 (JP); Kasuga, Tomonobu, Sagamihara-shi, Kanagawa 229-1132 (JP); Matsuoka, Yasuhiko, Sagamihara-shi, Kanagawa 229-1132 (JP); Kita, Taro, Sagamihara-shi, Kanagawa 229-1132 (JP); Kamata, Kazuki, Sagamihara-shi, Kanagawa 229-1132 (JP)
(72) Inventor: OI, Takaharu c/o Shonan Design Co., Ltd, Sagamihara-shi, Kanagawa 229-1132 (JP); KASUGA, Tomonobu c/o Shonan Design Co., Ltd, Sagamihara-shi, Kanagawa 229-1132 (JP); MATSUOKA, Yasuhiko c/o Shonan Design Co., Ltd, Sagamihara-shi, Kanagawa 229-1132 (JP); KITA, Taro c/o Shonan Design Co., Ltd, Sagamihara-shi, Kanagawa 229-1132 (JP); KAMATA, Kazuki c/o Shonan Design Co., Ltd, Sagamihara-shi, Kanagawa 229-1132 (JP); KIKUCHIHARA, Masato c/o Shonan Design Co., Ltd, Sagamihara-shi, Kanagawa 229-1132 (JP)
(74) Representative: Gesthuysen, Hans Dieter
(86) International application number: PCT/JP2003/015922
(87) International publication number: WO 2005/056266

(57) **Abstract**

An object of the invention is to establish a mass-production type method for manufacturing in which a complicated shaped model with a hollow part can be molded integrally. The method for manufacturing a hollow model according to the present invention is a method for manufacturing a hollow model having a hollow part having at least one opening communicating with an outside, comprising: a core article forming process comprising a padding forming process for forming a padding made of a foamed material (B) and having a size acceptable to the hollow part and a film forming process for applying a film forming component (A) on the padding in order to form a film having an external form similar to said hollow part; a hollow model forming process that said core article formed in the core article forming process is set in a mold for forming an external form of the hollow model, two-component reaction rapid curing type urethane liquid resin (D) is injected into interstice between them to be cured, and then the hollow model having the core article inside thereof is formed by demolding; a padding removing process that organic solvent (E) is injected into the film comprising the film forming component (A) to dissolve and remove the padding comprising the foaming material (B); and a film removing process that the film from which the padding was removed is pulled up through the opening to remove.

## Description

### TECHNICAL FIELD

The present invention relates to a method for manufacturing a hollow model having a hollow part having at least one opening communicating with an outside.

### BACKGROUND

There are various methods for manufacturing a configuration having a hollow part. Ancient people formed pots as pot-shaped hollow integral moldings by piling up or winding up a string-shaped clay like a snake's coil continuously. Besides, at present, a clay block put on a rotation plate is pulled up with constant thickness to produce a pot with a hollow portion. These methods are applied to a symmetrical simple circular molding.

In a field of glass craft articles, under a high temperature condition for holding a melted state, a melted glass material is got on a top of a blowing pipe, foamed like a balloon by pouring air into it from the end of the blowing pipe, a hollow glass craft article is produced by rotating the blowing pipe and forming an outside appearance of the melted glass material three-dimensionally. In manufacturing, under a high temperature condition for holding a melted state, a melted glass material is got on a top of a blowing pipe, entered into a segment die, foamed like a balloon by pouring air into it from the end of the blowing pipe, and pressed to a side surface of the segment die by air pressure, resulting that decrease of the temperature of the melted glass material is promoted, rapidly changing to a condition such as to lose flowability and maintain a set-up shape, separating the segment die and taking out a hollow molding. Currently, thus method is achieved by an automatic successive manufacturing, so that the same shaped hollow glass productions are mass produced.

In a plastic field, there is a method such that: a blow forming that air is poured into a thermoplastic sheet cylinder softened by heat to stick the thermoplastic sheet cylinder to an inner surface of a segment die and cool down it to be set, and then the segment die is separated to take out a hollow molding is industrialized, calling it a blow molding.

Besides, hollow moldings are formed by that: thermoplastic resin powder is poured from an opening of a heating die into the die, increasing temperature of the die to melt the thermoplastic resin powder contacting to an inner surface of the die to form a thermoplastic resin layer, cooling down the die and the thermoplastic resin layer stuck to the inner surface of the die to maintain its shape, removing the remaining non-melted thermoplastic resin power from the opening of the die, taking out the thermoplastic resin sheet from the opening of the die, expanding the resin sheet taken out by air pressure. For instance, character's masks as thus hollow moldings can be seamlessly formed by painting them. This is a slush molding. This is a method that a property such as to be elastically restored to an original shape after taking out from the opening of the die by folding it because the formed thermoplastic resin has rubber elasticity is used well.

These moldings produced by the blow molding or the slush molding are that the outside shapes of them are similar figures to the hollow portions of them, and it is difficult to produce moldings in which the outside shapes are completely different from the hollow portions.

In a casting field, it is cultivated that hollow castings are produced by setting up a core in a mold, pouring melted metal into a space between the mold and the core, standing to cool, breaking and removing the molding and the core to take them out. In this method, the molding with the shape of the hollow portion thereof completely different from the shape of the outside thereof can be produced, so that the method is a splendid method for producing complicated hollow shaped integral molding.

Thus, fundamentally, a hollow shaped model is produced by inserting a core into a mold, grasping a molding material to holding its shape and them removing the core. Besides, an example of the core material is air, sand joined with a binding material, resin powder with bad thermal conductivity, an expanded resin which is contracted and liquefied by heat and flown out, a wax which is liquefied and flown out easily, or polyethylene glycol which can be washed away by water. Namely, the core must be removed by breaking down, flowing out, contracting, burning and gasified, or dissolving and washing out.

Furthermore, at present, a new method for producing complicated hollow shaped model integrally different from the above mentioned fundamental methods for producing hollow shaped matters is developed. It is an optical molding method that energy beams (light) are irradiated to photo-setting resin to cure it in a doughnut plate shape and laminate it, varying the doughnut plate shape in turn by controlling the light by means of a computer to gain a three-dimensioned model, wherein a center portion of the doughnut plate shape is to give a hollow portion to the three-dimensioned model. This is also splendid method for producing hollow shaped integral molding. This method, however, is very advantage method for producing only one model, but it needs a long time to produce many same shaped models, so that the method would be applied to mass production. The above mentioned relates to integral producing of hollow shaped models, but it is certain that the methods have their merits and their demerits in shapes possible to mold, materials of the molding, mass-productionability, or economic factors.

A complicated hollow shaped model proposed here by us is used in a precious molding by a lost wax method and burned down by being flown out, broken down and burn out in the processes of removing wax and burning. Methods similar to this method can be referred as follows.

JP 2002-66689 A discloses a method that: a model which is made mainly of synthetic resin which is soluble in a solvent, the model is embedded into a mold due to an investment method or a ceramic mold method, the mold is soaked in the solvent for part of the mold to be dissolved or softened, a gap between the model and the mold is formed, a model is burned out with the mold at high temperature, and the model is vanished out.

JP 2001-121244 A discloses a method for manufacturing a cylindrical hollow precious molding in the precious molding by the lost wax method that a hollow wax model is manufactured by dividing a hollow model and connecting divided wax models.

Furthermore, JP 11-123723 A discloses a method that a core is formed with a foamed material of polymer compound, an unvulcanized rubber container is formed around the core, and then the rubber container is heated and vulcanized, and volume of the core is decreased because of melting the polymer foamed material or the core is dissolved by organic solvent and remove-d.

Besides, JP 8-30333 B discloses a method for producing powder molding product characterized in that a process for providing a core made of a foamed material which can be contracted and vanished by heating, a process for gaining a molding by arranging the core in a mold and pouring a molding material which is formed by compounding a powder material and a binder, and a process for vanishing the core by heating the molding integral with the core.

Recently, as technology makes remarkable progress, technical demand becomes high level and complicated. In a precision molding field, light-alloy superior in strength, heat resistance and corrosion resistance is developed, so that weight saving, high strength, high heat resistance and high corrosion resistance of the precious molding parts are developed remarkably. With the advance of this, industrial precious molding parts are used around automobile's engine, in aircraft's parts, parts of a rocket for space exploitation, parts for a space station and the like, titanium alloy is notable as a material. The parts do not have simple shapes like bottles or vases, but have complicated shapes which have plural three-dimensional curves and plural complicated hollow portions such as a manifold around an engine, hollow rotation wings for a turbine, engine parts for supplying fuel of rockets. Furthermore, since the weight saving is necessary, it is required to manufacture many complicated moldings with section thickness not more than 1 mm.

These precious molding articles are manufactured by precious molding due to a lost wax method generally, and one cast is necessary for one precious molding article. Furthermore, one model is necessary for one cast. Thus, it has many problems to manufacture precious molding articles industrially in a present art and is insufficient.

Firstly, it has a large problem in itself to mold a complicated hollow model integrally. A method that divided complicated hollow models are manufactured and then connect then to form a complicated hollow space is in general, but it is difficult to manufacture a model with superior dimensional accuracy because misregistration at connection is easy to be arisen as the shapes thereof are thinner and more complicated. Accordingly, it is necessary to establish a method for manufacturing complicated shaped models integrally which is a mass-production type.

Next, because it is difficult to make a thin model with section thickness not more than 1 mm since strength of material in prior wax models is low, so that it is a problem what is a material of the model. Thus, a lost wax in which a wax ingredient was improved by distributing and dissolving melamine resin powder into a wax ingredient was developed, but even strength and toughness of the material were insufficient, so that it was not suitable to a model with section thickness not more than 1 mm. Especially, it is known that phenomena such as breaking, crashing and deforming of thin portions thereof were happened often at removing of casts. Thus, it is a present state that we can not reach to molding or casting because production of a model itself is difficult.

After considering thus problem, a method for resolving the problem totally were found and the present invention was achieved.

### DISCLOSURE OF THE INVENTION

Therefore, a method for manufacturing a hollow model according to the present invention comprises, in a method for manufacturing a hollow model having a hollow part with at least one opening communicating with an outside, a core article forming process comprising a padding forming process for forming a padding made of a foamed material (B) and having a size acceptable to the hollow part and a film forming process for applying a film forming component (A) on the padding in order to form a film having an external form similar to the hollow part; a hollow model forming process that the core article formed in the core article forming process is set in a mold for forming an external form of the hollow model, two-component reaction rapid curing type urethane liquid resin (D) is injected into interstice between them to be cured, and then the hollow model having the core article inside thereof is formed by demolding; a padding removing process that organic solvent (E) is injected into the film comprising the film forming component (A) to dissolve and remove the padding comprising the foaming material (B); and a film removing process that the film from which the padding was removed is pulled up through the opening to remove.

Furthermore, the film forming component (A) is preferably flexible reaction curing urethane for injection with 50 to 90 in Shore hardness A, and the foaming material (B) is preferably expanded polystyrene.

Moreover, it is preferred that the two-component reaction curing type urethane liquid resin for injection (D) consists of multi-functional polyol component (F), multi-functional polyisocyanate component (G) and a plasticizer (H), and it is preferred that the plasticizer (e) is micro-dispersed through phase separation within 5 minutes of a working life.

Besides, it is preferred that the two-component reaction curing type urethane liquid resin (D) has a minute particulate wax component (I) and a very small quantity of moisture (J) at a specific rate to be foamed urethane containing contributed wax minute particles.

Furthermore, the hollow model manufactured in the method for manufacturing a hollow model are preferably used in a precious molding due to a lost wax method, and further a precious moldings are preferably manufactured by the hollow model.

### BRIEF DESCRIPTION OF THE DRAWINGS

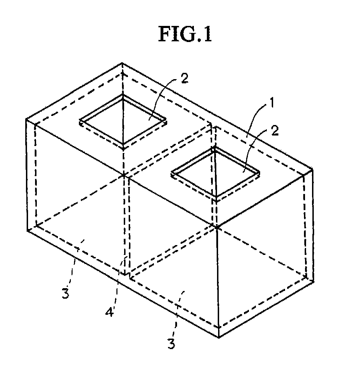

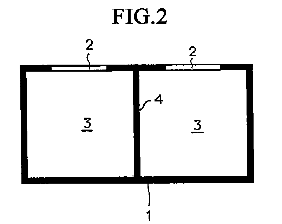

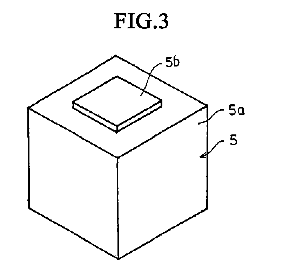

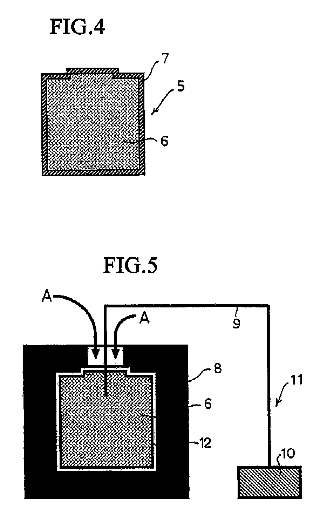

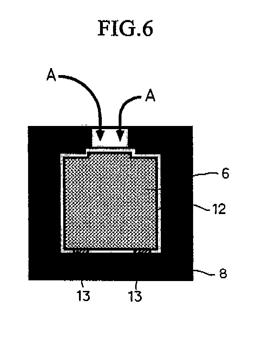

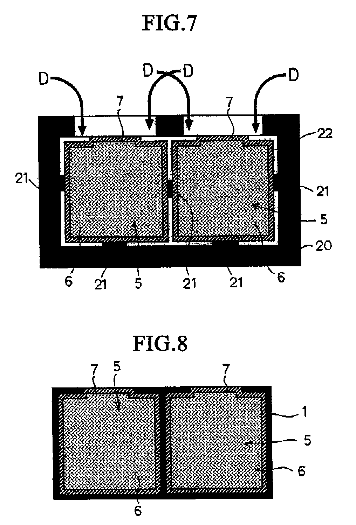

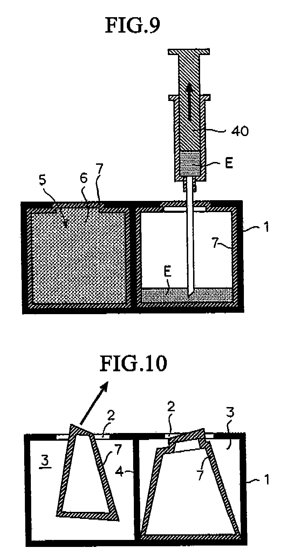

Fig. 1 is a perspective view showing one example of a hollow model according to a working mode of the present invention; Fig. 2 is a cross-sectional view of the hollow model shown in Fig. 1; Fig. 3 is a perspective view showing one example a core article according to the working mode of the present invention; Fig. 4 is a cross sectional view of the core article shown in Fig. 2; Fig. 5 is a cross-sectional view showing a part of a manufacturing process of the core article; Fig. 6 is a cross-sectional view showing another working mode of the part of the manufacturing process of the core article; Fig. 7 is a cross-sectional view showing a part of the manufacturing process of the hollow model; Fig. 8 is a cross-sectional view showing the hollow model having the core article; Fig. 9 is a cross-sectional view showing a process for removing a padding; and Fig. 10 is a cross-sectional view showing a process for removing a film of the core article.

### BEST MODE FOR CARRYING OUT THE INVENTION

Hereinafter, best modes for carrying out the invention are explained.

When an end-product is a precious molding by a lost wax method, one model is necessary to one product since a model is vanished in a dewaxing / burning process when a mold is manufactured. It is easy to make only one complicated shaped model with a hollow part. This is to form a complicated shaped model with a hollow part by processing three-dimension data to CAM data in CAD, transmitting them to an optical molding machine and processing optical molding. When a plurality of models which have the same shapes are manufactured, the optical molding method can not respond to the requirement because a manufacturing speed of it is slow. In this case, by making the complicated shaped model with a hollow part obtained by the optical molding to a master model and copying it, plural complicated shaped models with plural hollow parts can be manufactured. In this case, it is required to the models that many complicated shaped model with hollow parts are manufactured and they are formed integrally and seamless; parts with section thickness not more than 1 mm exist in various places; and they have characteristics of melting, flowing out, burning out and gasifying in a dewaxing /burning process when a mold are manufactured by the lost wax method.

On the assumption of the above, the complicated shaped model with the hollow part using a specific shaped core article according to the present invention is explained hereinafter. Fig. 1 and Fig. 2 show one example of a hollow model with a hollow part. The hollow model 1 is an article with section thickness of 1 mm having hollow parts 3 which are partitioned by a partition 4 and communicating with openings 2 respectively.

Next, a core article necessary to form the hollow model 1 shown in Fig. 1 and Fig. 2 is shown in Fig. 3. The core article 5 comprises a hollow space forming portion 5a for forming the hollow part 3 and an opening forming portion 5b for forming the opening 2. Besides, the core article 5 according to the working mode of the present invention is constituted of a padding 6 consisting of a foamed material (B) and a film 7 consisting of film forming component (A) applied on the padding 6.

Here, a process for manufacturing the core article 5 is explained. The padding 6 is formed by cutting out of a foamed board. In the case that the padding itself has a shape with a curved portion, the core article is formed by NC processing under CAD data to be formed to be a specific shape. This padding 6 is an article having a size little smaller than the core part , but serious dimensional accuracy is not necessary as it may be vanished after all.

Then, the padding 6 is arranged in a mold 8 for forming a core article. In the working mode shown in Fig. 5, the padding 6 is suspended in the mold 8 by a supporting device 11 comprising supporting arms 9 and weight 10 to be held on a hollow space. In the working mode shown in Fig. 6, the padding 6 is held in the mold 8 by supporting members 13 comprising a material similar to a film forming component (A) applied on the padding 6, especially reaction curing type urethane liquid resin in this embodiment. Besides, the mold 8 for forming a core article influences a shape of the core article 5, so that a certain measure of dimensional accuracy is required.

In the condition shown in Fig. 5 and Fig. 6, the reaction curing type urethane liquid resin is injected into an interstice 12 between the padding 6 and the mold applied with a mold releasing agent, so that the film 7 is formed. In this case, either an atmospheric casting or a vacuum casting is suitable. Preferably, the vacuum casting is more suitable. Then, after injecting and curing of the reaction curing type urethane liquid resin, the core article 5 is obtained by dividing the mold 8 and demolding the core article 5 laminated with the film 7 consisting of the film forming component (A).

Next, processes that the core article 5 is set in a mold 20, two-component reaction rapid curing type urethane liquid resin (D) is injected, cured and demolded are explained. As shown in Fig. 7, two core articles 5 are installed in the mold 20 for a model and held in a hollow space of the mold 20 by supporting units 21 consisting of the same material as the supporting device (not shown in this figure) or the two-component reaction rapid curing type urethane liquid resin (D). The mold 20 influences a shape of the model, so that a certain measure of dimensional accuracy is required.

Then the two-component reaction rapid curing type urethane liquid resin (D) being a material for the model is injected between a interstice 22 between the core article 5 and the mold applied with a mold releasing agent. In this case, either an atmospheric casting or a vacuum casting is suitable. Preferably, the vacuum casting is more suitable. After injection and curing, the hollow model 1 containing the core article as shown in Fig. 8 is demolded by dividing the mold 20.

Then, as shown in Fig. 9, organic solvent (E) is injected into the foamed material (B) which is the padding 6, so that the foamed material (B) is dissolved and removed. In this embodiment, the organic solvent (E) is injected to the foamed material (B) which is the padding 6 surrounded by the hollow model 1 by an injector 40, Owing to it, the foamed material (B) is dissolved and liquefied. The foamed material (B) is dissolved completely to the organic solvent (E) in a bag of the film 7, so that it does not erode a model material. The organic solvent (E) which dissolved the foamed material (B) is sucked and removed by the injector. Thus, the foamed material (B) is vanished and removed in an extremely short time without adding heat or physical stress.

Finally, as shown in Fig. 10, the film consisting of the film forming component (A) is pulled up through the opening 2 of the hollow model 1 and removed. In this embodiment, the film 7 contained in the model is cut on necessary positions by scissors and pulled out by a pair of tweezers. This method is not suitable in a case that the opening 2 of the model is the size of an needle, but this process is established sufficiently if the opening is the size such that the tweezers and scissors can be entered. By considering it in a process for designing the shape, it is possible to make the opening of the model to a specific size. In this process, the film 7 can be pulled out easily even if it is not carried out carcfully, and if the model has a certain measure of strong solid state properties, there is no damage therein. To the contrary, the prior lost wax model is a strength shortage and there is much risk such that damage is arisen.

As described above, the hollow model 1 with hollow parts 3 can be manufactured. In order to add detailed explanation, material components used in every process are explained.

The core article 5 of the present invention may be two layer constitution consisting of the foam material (B) laminated with the film forming component (A). As the foamed material (B) which is the padding 6 used in the core article 5, various polymeric foamed materials such as foamed styrene, foamed urethane, foamed phenol and the like are listed up. In order to be dissolved and removed in the subsequent process, it is necessary that the most advantageous property is to dissolve into the organic solvent easily. Therefore, as a preferred foamed material (B), a foamed material without cross-linked structure peculiar to heat curing type resin, namely a foamed material of thermoplastic is dissolved to the organic solvent most easily. Due to thus reason, foamed styrene is most preferred as the foamed material (B). The foamed material comprising reaction cross-linked curing type resin such as foamed urethane or foamed phenol is difficult to be dissolved in the organic solvent, so that they are not suitable because it must be scraped away for removing.

The film forming component (A) forming the film 7 on a surface of the padding 6 is a hardened material of a liquid resin for casting. As a liquid resin for casting, two-component reaction curing type urethane liquid resin, two-component reaction curing type epoxy liquid resin, catalyzed curing type unsaturated polyester liquid resin, catalyzed curing type acryl liquid resin, catalyzed RTV silicon liquid resin and the like are listed up. As a liquid resin for casting used in lamination to the padding, because it is pulled out through the opening 2 of the model finally, it is necessary that: it is flexible, can be cut by scissors or a knife, and needs tensile strength that it is not broken easily when it is pulled out by tweezers. Besides, since it is injected into the interstice between the mold 8 and the padding 6 and cured, properties such as viscosity which makes mixing and injecting possible and a curing speed with a specific value at room temperature are necessary. As thus liquid resin, two-component reaction curing type solventless urethane liquid resin which is an urethane elastomer type with 50 to 90 in Shore hardness A is the most effective.

To the mold 8 for forming a core article, a metal mold, a simple mold, a resin mold or a plaster mold is used. The metal mold is used in mass-production, the simple mold is used in middle quantity production, and the resin mold or the plaster mold is used in small quantity production. A silicon rubber mold for trial manufacture is effective to a shape which lacks a draft angle, but production of 20 to 30 pieces is limited. To trial manufacture of about 100 pieces, it is effective that plural silicon molds are used.

As the organic solvent (E) dissolving the foamed styrene which is the padding 6, styrene, alkyl styrene, styrene derivative and chlorinated solvent, esters and ketones are listed up. These are low-boiling solvents, so that it is necessary to give attention to a bad smell or fire. Alkyl styrene is the most preferred because it is middle-boiling solvent and a danger for a bad smell or fire is lower.

Because the two-component reaction rapid curing type urethane liquid resin (D) for molding which is a model component is one of main points, so that it is explained in detail. The two-component reaction rapid curing type urethane liquid resin (D) which is a material for a model used in the present invention comprises a multifunctional polyol component (F), a multifunctional polyisocyanate component (G) and a plasticizer (H), and is a specific material characterized in that it is micro-dispersed through phase separation at rapid curing. Furthermore, a wax component (I) and a water component (J) are added into this composition, so that performance of the burned-out model is increased much.

The polyol component (a) may be a low molecular polyol, a polyether polyol, an amine polyol, polyester polyol, an acrylic polyol, or a polybutadiene polyol and so on. Castor oil and its derivatives may be used as a special.

Ethylene glycol, propylene glycol, 1-4 butanediol, glycerine, trimethylolpropane, pentaerythritol, etc. is mentioned as the low molecular polyol.

The polyether polyol may be a polyether polyol, etc. with various molecular weights obtained by adding ethylene oxide or propylene oxide into the low molecular polyol. Hydroxyl group terminal may be primary or secondary by various blending systems such as addition by only ethylene oxide, additional by only propylene oxide, addition by mixture, addition in sequence, etc. Various types of polyether polyol with ethylene oxide and propylene oxide rendering diverse hydrophilic or hydrophobic properties in their additional chains can be achieved by varying reactivity of the hydroxyl group terminal through different blending methods. Besides, polytetramethylene ether glycol obtained through cationic polymerization of THF, which is often referred to as PTMG, may be used.

The amine polyol is a substance achieved by adding ethylene oxide or propylene oxide to a low molecular amine such as ammonia, ethylene diamine, or polyethylene polyamine. Thus, the amine polyol, which contains tertiary nitrogen within its molecule, is a polyol retaining an effect of promoting reaction of isocyanate. The amine polyol containing ammonia as a starter is trifunctional, the amine polyol containing the ethylene diamine as a starter is quadrafunctional and the amine polyol containing polyethylene polyamine as a starter is multifunctional more than four functions. These are important components which can not be lacked in the present invention in which rapid curing is carried out.

The polyester polyol may be condensed polyester polyol having a hydroxyl group constituting a molecular terminal achieved by esterifying a dibasic acid and a low molecular polyol. By selecting specific types of dibasic acid and low molecular diol/triol, adjusting the molecular weight and using a small quantity of a multifunctional low molecular polyol, diverse types of polyester polyol can be prepared. The dibasic acid which is often used to prepare a condensed polyester polyol is adipic acid. The low molecular diol may be ethylene glycol, propylene glycol, 1-4 butanediol or the like, whereas the low molecular triol may be glycerine, trimethylolpropane, or glycerin or trimethylolpropane containing small quantity of alkylene oxide. In addition, the functional radix and the molecular weight of an ε-caprolactam ring-opening polymerization type polyester polyol can be adjusted by controlling the ring-opening polymerization starter type and the quantity of the starter used for the ring-opening polymerization. There are matters having polyester chains and polyether chains by adding alkylene oxide to them, or there are also matters having much variety. Besides, there is also a carbonate diol obtained by opening the ring of ethylene carbonate.

The acrylic polyol is that an acrylic monomer containing a hydroxyl group terminal is polymerized in methyl acrylate or methyl meta-acrylate, and is an acrylic oligomer having a plurality of hydroxyl groups in an acrylic chain. Various kinds of acrylic polyol formed by selecting specific kinds of acrylic monomer and adjusting their molecular weight are marketed. A liquid resin whose polymerization degree is increased to the level at which film molding is enabled to have a high molecular weight and which is dissolved in an organic solvent is a paint with superior weather resistance due to slight cross-linking induced by aliphatic polyisocyanate.

The polybutadiene polyol is a copolymer consisting of butadiene containing a hydroxyl group at a terminal thereof and a compound having double bonds. It is a polyol with a relatively high level of hydrophobic property.

A urethane modified polyol with a hydroxyl group terminal obtained by joining thus multifunctional polyol via polyisocyanate may be used as well. In such a case, viscosity tends to increase since the molecular weight increases slightly due to oligomerization resulting from the urethane modification. Accordingly, it is preferred that a part of the multi-functional polyol is substituted for urethane modification polyol.

One of the multifunctional polyols listed above may be used by itself, or two or more multifunctional polyols may be used in combination. Under normal circumstances, the molecular structure is designed by blending various kinds of multifunctional polyol constituents in specific quantities in order to satisfy numerous requirements corresponding to a given purpose of use. Such a multifunctional polyol component (F) includes an active hydroxyl group at a molecular terminal and its reactivity with isocyanate is different by the kind of hydroxyl group at the molecular terminal.

In particular, polyether polyols and polyester polyols have high levels of affinity with water and also contain minute quantities of water. Such extremely low water contents do not cause any concern as long as the polyols are used in aqueous foamed urethane. However, if they are used in non-foamed urethane, it is necessary to rigorously carry out reduction control of the minute quantities of water. For this reason, the multifunctional polyol component (F) is manufactured through heating, mixing and dehydrating progresses.

The multi-functional polyisocyanate component (G) is a compound containing two or more isocyanate groups in a single molecule thereof, and the polyol component is to contain two or more a hydroxyl groups in a single molecule thereof. The isocyanate groups are functional groups with an extremely high level of reactivity, and react with hydroxyl groups containing active hydrogen, amino groups or thiol groups. Since the amino groups or the thiol groups react instantaneously, they are limitedly applied to less reactive isocyanate components or less reactive aromatic amines, but they still react fairly quickly, so that such a combination is not commonly used.

The polyisocyanate component (G) may be an aromatic polyisocyanate, an aliphatic polyisocyanate, or an alicyclic isocyanate. Typical examples of the aromatic polyisocyanate include tolylene diisocyanate and diphenylmethane diisocyanate. The tolylene diisocyanate is obtained as a mixture of various isomers in chemical reaction at production, and various industrial products with varying mixing ratios of 2,4-body and 2,6-body, e.g., TDI-100 (2,4-TDI 100%), TDI-80 (2,4-TDI 80%, 2,6-TDI 20%), TDI-65 (2,4-TDI 65%, 2,6-TDI 35%), are marketed. The diphenylmethane diisocyanate is obtained as a mixture of various isomers in chemical reaction at production, being pure MDI and polymeric MDI in industrial applications. The pure MDI is a dicaryonic, whereas polymeric MDI is a multicaryonic. While the pure MDI is insolated through distillation, the polymeric MDI is obtained as residue. Since the number of muticaryons in the polymeric MDI changes under different manufacturing conditions, various types of polymeric MDI are marketed from numerous manufacturers. In addition, other examples of the aromatic polyisocyanate include naphthalene diisocyanate that an isocyanate group is added to a naphthalene nucleus or tolidine diisocyanate. Examples of the aliphatic polyisocyanate include hexamethylene diisocyanate, isophorone diisocyanate, xylylene diisocyanate, and lysine diisocyanate. The alicyclic polyisocyanate may be hydrogenated xylylene diisocyanate obtained by hydrogenating xylylene diisocyanate, or hydrogenated MDI obtained by hydrogenating MDI.

Because the polyisocyanate is generally highly reactive and especially volatile polyisocyanate is highly toxic, they are normally used after undergoing various types of metamorphisms. Such a metamorphism may be urethane modification, dimerization, trimerization, polycarbonimidization, urea modification, pre-polymerization, blocking and so on. These are to leave an isocyanate group at a terminal thereof by inducing self condensation by using higher reactivity of the isocyanate group or by joining it via an active component.

The specific range applied to the double fluid reactive setting liquid urethane resin (C) according to the present invention constituted with the multifunctional polyol component (A) and the multifunctional polyisocyanate component (B) is now explained.

The two-component reaction curing type urethane liquid resin (D) containing the multifunctional polyol component (F) and the multifunctional polyisocyanate component (G) as resin constituents thereof contains 2 to 20 wt.% of polyether chains, as indicated in the chemical structure formula presented below.

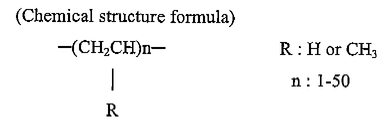

Polyether chains will be introduced by using polyether to constitute the multifunctional polyol component (F). Alternatively, they may be introduced via a polyether ester if a polyester polyol is used, Otherwise, polyether chains may be introduced by way of a so-called quasi-prepolymer, with a terminal isocyanate joined with a polyether, which can be used as a multifunctional polyisocyanate component (G). The polyether chains constitute the soft component of the urethane resin, and polyether chains derived from propylene oxide, in particular, are extremely soft. When such extremely soft polyether chains are heated to high temperature during the dewaxing and burning processes, they become thermally decomposed and the thermally decomposed polyether chains become liquefied, flow out and burn off readily. The present invention takes full advantage of these characteristics by ensuring that the liquid resin according to the present invention contains 2 to 25 wt% of polyether chains. The full effect of the polyether chains does not manifest if the polyether chain content is less than 2 wt%. Once the polyether chain content exceeds 20 wt%, the ratio of the soft component becomes too high and, as a result, the hardened object becomes softened, making it difficult to keep the level of hardness required of the model. For this reason, the more desirable polyether chain content is 5 to 20 wt%.

The multifunctional polyol component (A) and the multifunctional polyisocyanate component (B) are blended in quantities determined by calculating the NCO radix and the OH radix and setting the NCO/OH ratio of the NCO radix and the OH radix to a value close to 1.0 in the case of non-foam urethane. The NCO/OH ratio of the multifunctional polyol component (A) and the multifunctional polyisocyanate component (B) to constitute urethane foam is set to 1.0 to 1.1, i.e., in a range where the NCO value is larger than the OH value.

When NCO/OH = 1.0, the numbers of the isocyanate groups and the hydroxyl groups are equal to each other and at this setting, the reaction ends when both types of groups are all used in the reaction. In other words, it is a setting at which the maximum strength is realized. According to the present invention, NCO/OH is set to a range of 0.7 to 1.0, i.e., in a range where the NCO value is smaller than the OH value. Under normal circumstances, urethane molecules are not designed in such an NCO-short range. The molecular design in this unusual NCO/OH range is enabled according to the present invention, since the multifunctional polyisocyanate component with an average functional radix 2.1 or greater and the multifunctional polyol component with an average functional radix of 3.0 or greater are used and, as a result, a three-dimensional network structure is achieved even in the range over which the value of NCO/OH is 1.0 or less. While there are more OH groups than NCO groups in this state, multifunctional monomers are used and, for this reason, the monomers become completely linked to constitute a principal chain without the functional groups achieving complete reaction. The excess OH groups are retained in the principle chains when the reaction ends. This is considered to help sustain a high level of hydrophilic property, which facilitates micro dispersion of the highly hydrophobic plasticizer through phase separation.

For the reasons discussed above, NCO/OH is set to 0.7 to 1.0 and more desirably to 0.8 to 0.9. Once the NCO/OH ratio becomes equal to or less than 0.7, the number of isocyanate groups relative to the number of hydroxyl groups becomes too small and, as a result, a three-dimensional network structure cannot be achieved in the reactively set resin compound, which leads to a major reduction in the hardness and ultimately the resin becomes too soft to retain the original shape. If, on the other hand, the NCO/OH ratio is equal to or greater than 1.0, the number of excess isocyanate groups becomes too large and too many isocyanate groups will be left unused in the reaction when the resin needs to be disengaged from the die. This may lead to undesirable results such as failure to achieve a specific level of hardness and inconsistent color at the surface of the hardened object.

As a catalyst that promotes the chemical reaction of the multifunctional polyol component (F) and the multifunctional polyisocyanate component (G), a metal catalyst or an amine catalyst may be used. Examples of a metal catalyst that may be used include octylic zinc, octylic lead, dibutyltin denatured, dibutyltin diacetate and the like. Examples of an amine catalyst that may be used include triethylene diamine, NN-dimethyl piperazine, N-methyl morpholine and the like. The catalyst is normally added into the polyol component. Under normal circumstances, the multifunctional polyol component (F) contains 1 to 1000 ppm of catalyst and the working life is thus adjusted. According to the present invention, the catalyst is added in the multifunctional polyol component (F) so has to set the length of time over which work is enabled, i.e., the working life, to 5 minutes or less. If the working life is set to 5 minutes or more, the setting-disengaging time exceeds five hours, which may become problematic for resin model production. If the working life is less than 1 minute, the reaction viscosity rises quickly, making it difficult to secure a sufficient length of time for the double fluid mixing and casting processes. For these reasons, the working life should be set to 1 to 2 minutes.

Next, the plasticizer (H) used in the present invention is explained, The plasticizer (H) used in the present invention is an inactive chemical compound having no functional group that induces a chemical reaction with volatility insignificant enough to be disregarded. The plasticizer (H) may be an ester plasticizer, an ether plasticizer or an ester/ether plasticizer, More specifically, typical examples of the ester plasticizer are dioctyl adipate (DOA), dioctyl phthalate (DOP) and dibutyl phthalate (DBP). Alternatively, benzyl acetate, benzoic butyl, benzoic octyl, benzoic isopentyl, ethylene glycol benzoic diester, polyethylene glycol benzoic diester, propylene glycol benzoic diester, poly propylene glycol benzoic diester, ethylene glycol dioleate, polyethylene glycol dioleate, propylene glycol dioleate and polypropylene glycol dioleate. Examples of the ether plasticizer include ethylene glycol dibutyl ether, ethylene glycol diphenyl ether, diethylene glycol diethyl ether, diethylene glycol methyl ethyl ether, diethylene glycol diethyl ether, diethylene glycol ethyl butyl ether, diethylene glycol dibutyl ether, triethylene glycol diethyl ether, triethylene glycol diethyl ether, triethylene glycol diethyl ether, triethylene glycol dibutyl ether, tetraethylene glycol diethyl ether, tetraethylene glycol diethyl ether and the like. Examples of the ethyl/ester plasticizer include ethylene glycol monobutyl ether acetate, diethylene glycol monoethyl ether acetate, diethylene glycol monobutyl ether acetate, diethylene glycol mono phenyl ether acetate and the like.

The plasticizer (H) is used in a quantity that amounts to 2 to 20wt% relative to the entire weight of the two-component reaction curing type urethane liquid resin (D). If the content of the plasticizer (H) exceeds 20 wt%, the plasticizer (H) bleeds over the surface of the resin model readily to cause stickiness. If, on the other hand, the plasticizer (H) is used in a quantity amounting to less than 2wt% the thermally decomposed and melted resin does not flow out readily during the dewaxing/burning processes since the plasticizer (H), which is a highly viscous liquid at room temperature but has a lower level of viscosity at higher temperatures, is not contained in sufficient quantity. While it is desirable to take full advantage of these characteristics of the plasticizer by using a greater quantity of the plasticizer (H), an excessively high plasticizer content in the resin results in bleeding of the plasticizer over the surface of the hardened object and the surface becomes tacky and sticky, as described earlier. Accordingly, it was found that a maximum content for the plasticizer (H) can be achieved by rapidly setting the resin within less than 5 minutes of working life and trapping the plasticizer (H) having undergone phase separation from the cured resin in the three-dimensional network structure of the cured resin in a state of micro dispersion.

Such phase separation micro dispersion can be regarded as a state in which the plasticizer (H) is enclosed by the cured resin assuming a honeycomb structure. The cured resin assuming the honeycomb structure has superior physical strength, and the honeycomb structure can also be regarded as a three-dimensional structure within which the plasticizer (H) is secured within the honeycomb and is not allowed to be released to the outside. The structure does not allow the plasticizer (H) to bleed over the surface of the hardened object to induce tackiness even when the plasticizer is contained at a relatively high ratio. If the phase separation micro dispersion structure is not adopted, the plasticizer is dissolved into the hardened resin, and once it reaches the saturation level, the plasticizer becomes bled over the surface of the hardened object to result in tackiness. If the extent of bleeding is significant, the surface becomes sticky. The phase separation micro dispersion structure can be observed through an electron microscope. The formation of the phase separation micro dispersion structure needs to be aided by rapidly hardening the resin within a working life of 5 minutes or less. Preferably, the working life should be set to 3 minutes or less, and even more desirably to 1 to 2 minutes. If the working life is set to 5 minutes or more, the process of phase separation micro dispersion cannot be completed with ease, and since it will take a day or more to disengage the model during the model production, the model production will become an extremely slow process.

When the plasticizer (H) is contained in the two-component reaction curing type urethane liquid resin (D), it needs to be uniformly dissolved in the liquid resin, whereas the phase separation micro dispersion of the plasticizer from the cured resin is promoted during the reactive hardening stage, and the micro dispersed plasticizer is trapped to prevent from bleeding to the surface at the time when the reactive hardening is completed. The composition is constituted on thus delicate balance. Namely, the composition must be designed within the range that balance between hydrophilic and hydrophobic properties of the plasticizer (H) and the reaction curing resin is adjusted well. An alkylene oxide chain is available as a hydrophilic segment, and a hydrocarbon chain is available as a hydrophobic segment. The properties of the hydrophilic segment and the hydrophobic segment are determined by selecting a specific type of raw monomer. A certain degree of dissociation should be assured with regard to the balance between the hydrophilic property and the hydrophobic property. If the two-component reaction curing type urethane liquid resin (D) contains a large number of ethylene oxide chains, the hydrophilic property becomes more pronounced, whereas if the ethylene oxide chains are replaced with propylene oxide chains, the level of hydrophilic property is weakened rather than the case of using the ethylene oxide chains. If ethylene oxide chains or propylene oxide chains are used in a smaller quantity, the hydrophobic property of the two-component reaction curing type urethane liquid resin (D) becomes more pronounced. Thus, the hydrophilic property and the hydrophobic property can be adjusted within a certain range. In addition, by adjusting the type and quantity of the plasticizer (H), the hydrophilic property and the hydrophobic property of the plasticizer itself can be adjusted within a certain range. For instance, if a terminal of the plasticizer is constituted with alkyl ether, the level of the hydrophobic property increases as it changes to methyl ether, ethyl ether, butyl ether, phenyl ether in turn. Thus, the range over which the phase separation micro dispersion is achieved is set by changing loading and a chemical structure of the plasticizer (H) and/or loading and chemical structure of the two-component reaction curing type urethane liquid resin (D). The desirable phase separation micro dispersion can be achieved by setting the hydrophobic property of the plasticizer (H) to a relative high level, and setting the hydrophilic property of the resin component to a relative high level through the method described above.

Next, the wax component (I) used in the present invention is explained. The wax component (I) is an inactive chemical compound having no functional groups that induce a chemical reaction, with volatility the extent of which is insignificant enough to be disregarded. It is a solid substance manifesting crystallization at room temperature. The wax component (I) may be a natural wax that is found in the natural world or a synthetic wax obtained through synthesis. The natural wax is most commonly found in candles. The chemical composition of the natural wax is referred to as wax ester which is constituted with higher fatty acid and higher alcohol. The number of carbons in the higher fatty acid - higher alcohol is 16 or higher in most instances. Since it is an ester compound, it has a small residual acid value. In other words, it contains residual free fatty acids. In addition, since numerous types of saturated and unsaturated higher fatty acids exist in the natural environment, certain types of wax contain unsaturated higher fatty acids or hydroxyl acid as well. These waxes have chemical structures close to that of paraffin and are crystallized or uncrystallized solid substances at room temperature. Their melting points are normally approximately 80°C. Typical examples of waxes include candela wax, carnauba wax, rice wax, bees wax, whale wax, montan wax, lanolin wax, alpha wax, cork fiber wax, sugarcane wax, wood wax, sumac wax, micro crystalline wax, and earth wax. Examples of synthetic waxes include polyethylene wax, wax obtained through Fischer-Ttopsch synthesis, a waxy copolymer and an ester constituted with such waxy copolymers, wax obtained by adding hydrogen as a catalyst to C₈-C₃₂ animal/vegetable oil or edible oil having straight or branched fat chains, silicon wax and fluorine containing wax. One of these wax substances may be used by itself, a plurality of the wax substances may be used in combination or a wax component containing a third constituent may be used.

Such a wax component (I) manifests a pronounced paraffin or olefinic property, has a high level of hydrophobic property and is in a solid state at room temperature. Thus, it does not readily become dissolved into the multifunctional polyol component (F), the multifunctional polyisocyanate component (G) or the plasticizer (H). For this reason, it does not readily become dissolved when mixed in the two-component reaction curing type urethane liquid resin (D) and mostly remains suspended in the liquid. As the two-component reaction curing type urethane liquid resin (D) becomes rapidly set in this state, the wax becomes enclosed in a solid state within the resin achieving the three-dimensional network structure. Thus, the resin model according to the present invention has an advantage in that since the wax component is not directly exposed at the surface thereof, none of the problems of the conventional wax model arise. The wax component (I) is highly effective in accelerating the flow out of "the resin constituents which have become softened, thermally decomposed and melted as heat" is applied during the dewaxing / burning processes.

The wax component (I) is added so as to achieve a ratio of 1 to 20 wt% relative to the two-component reaction curing type urethane liquid resin (D). If the wax content is equal to or less than 1 wt%, the desired effect of using the wax component (I) does not manifest during the dewaxing process. If the wax content is equal to or greater than 20 wt%, on the other hand, the fluidity of the two-component reaction curing type urethane liquid resin (D) becomes poor and the operability of the resin model production is compromised. In addition, the strength of the resin model itself becomes lowered and the likelihood of the resin model becoming cracked or broken during disengaging becomes high. Accordingly, the wax content should be set to a range of 5 to 20wt% and more desirably to a range of 10 to 15 wt%.

The wax component (I) is used in the form of grains, flakes or lumps in a size small enough to be contained within a 1cm³ cube. Such wax grains or lumps may assume a roughly spherical shape, a roughly cubic shape or an irregular shape. In other words, the shape is not limited to true spheres or cubes. Their size should be small enough to be contained in a 1cm³ cube. Their diameter should be, preferably, 1mm or less. These wax particles naturally do not flow into any portion of the model with a wall thickness of 1mm or less. While this prevents uniform distribution of the wax component (I) in the model, it does not pose a problem as long as the casting mold can be manufactured and a high precision cast product is produced by assuring high levels of model shape retention and dimensional accuracy, smooth thermal decomposition, fusion and flow out and a minimum quantity of residual ash resulting from high temperature decomposition. The wax component is allowed to flow into portions of the model with wall thicknesses equal to or greater than 1mm. Since unhardened liquid resin, too, is naturally allowed to flow into these portions with ease, a model with a resin component distributed evenly throughout its entirety can be disengaged from the mold. In a sense, the wax component (I) flowing into the portions of the model with large wall thicknesses in great quantities is advantageous. Namely, when the model is being dewaxed and baked, the melting · flow out · decomposition · burning process tends to be slowed down in thick portions. The presence of the wax component (I) in relatively large quantities fixed by the cured resin in these portions and ensures smooth melting, flowing-out, decomposition and burning during the dewaxing and burning processes.

The water component (J) is constituted of H₂O. The water component (J) includes; 1) the water blended in on purpose, 2) small quantities of water that become mixed into the raw chemical materials during normal manufacturing steps and 3) water in the air absorbed into the raw materials. The water component (J) according to the present invention includes them. Carbon dioxide gas generated through the chemical reaction between the water component (J) and the multifunctional polyisocyanate is used as a foaming agent. In other words, the water component is used to foam urethane with the water. Thus, a model constituted with resin foam containing the plasticizer (H), the wax component (I) and air bubbles is achieved. Such a resin model constituted of foam achieved within a specific controlled foam formation range retains a firm shape and is highly effective during the dewaxing · burning processes in which it is heated, becomes melted and decomposed, flows out and becomes burnt.

The main factor that determines the expansion ratio is the quantity of the water component (J), and sub factors such as the presence/absence of water at the die surface and the temperature and the humidity of the surrounding air also affect the expansion ratio. The water component (J) is included at a ratio of 0.01 to 1.0 wt% relative to the two-component reaction curing type urethane liquid resin (D). It is desirable to set the water content to 0.03 to 0.5 wt%, and is even more desirable to set it to 0.08 to 0.15 wt%. If the ratio of the water component (J) is equal to or greater than 1.0 wt%, air bubbles tend to concentrate at the resin surface in a large quantity, which reduces the thickness of the skin layer at the model surface. Such a thin skin layer tends to become broken readily during the disengaging process, to allow air bubble cavities to be exposed at the model surface, which leaves the model surface in an irregular undesirable state. In other words, the foaming level must be controlled to a very low level. A foam regulator is used when a foaming urethane in order to regulate the size of the bubbles. According to the present invention, too, a foam regulator is added so as to regulate the size of the bubbles.

The water content (J) is normally blended in the multifunctional polyol component (F). The quantity of the water component added and then blended evenly into the multifunctional polyol component (F) is controlled by implementing metering for trace amounts of water through the Karl Fischer method. The water component blended in the multifunctional polyol component (F) may be pure water or it may be a substance containing water as long as it does not adversely affect the processes of model production. For instance, the water component may be provided as a surface active agent aqueous solution, a dye aqueous solution, a water-based glue, a resin aqueous solution or the like.

When aqueous foaming the resin, a foam regulator is used in order to achieve the highest possible level of uniformity in the size of the bubbles. A foam regulator is a type of surface active agent. It is most commonly manufactured by adding alkylene oxide to silicon. By adding a foam regulator when aqueous foaming the model, the model can be formed as a foam model containing bubbles with a relatively uniform size. While the strength of the model is lowered, a great advantage is achieved during the dewaxing / burning processes since the quantities of the components that become dewaxed and baked are greatly reduced. No particularly rigorous requirements need to be satisfied with regard to the model strength, and the model only needs to have a level of strength that allows it to be disengaged smoothly. In addition, the disengaged model only needs to achieve a level of strength that allows it to be transported without breakage. It should also undergo a minimum extent of change in its shape while it is stored at room temperature and should assure a sufficient level of strength to withstand the refractory coating process. The resin model according to the present invention containing the plasticizer and the wax component assures a satisfactory level of strength meeting such requirements.

The organic solvent may be used in the two-component reaction curing type urethane liquid resin (D). An inactive organic solvent that does not chemically react with isocyanate should be selected for the organic solvent. Examples of the inactive organic solvent include an aromatic organic solvent, an ester organic solvent, an ether organic solvent, an aliphatic organic solvent and a chlorine-based organic solvent. The requirements that the organic solvent must satisfy are that it dissolves the multifunctional polyether (F), the multifunctional polyisocyanate (G) and the plasticizer (H), that it only has a mild odor, that it does not generate any toxic gas when it is burned and that it is economical. The organic solvent satisfying such requirements should be preferably an aromatic organic solvent such as toluene or xylene.

Since the organic solvent tends to become gasified readily while the two-component reaction curing type urethane liquid resin (D) is heated and gels, it also acts as a foaming agent. In addition, the organic solvent remains trapped in small quantities inside the hardened and disengaged model. The presence of the organic solvent remaining in the portions of the model with wall thicknesses equal to or greater than 1 mm, which do not burn easily helps burn the thick portions more efficiently during the dewaxing / burning processes. It also achieves a great advantage in that it lowers the viscosity of the resin to improve the operability of the model production.

Fine particles of a natural high molecular waste are combined with the two-component reaction curing type urethane liquid resin (D) and used. The fine natural high molecular waste particles may be fine particles of paper waste, wood waste or fabric waste. Examples of fine paper waste particles include fine particles of newspaper, advertising fliers, copying paper, wrapping paper and corrugated cardboard. Examples of fine wood waste particles include fine particles of building lumber waste, civil engineering lumber waste, furniture wood waste, wood fabrication leavings, scrub plant waste and sawdust. Examples of fine fabric waste particles include fine particles of cotton cloth, linen cloth and wool cloth. More specifically, fine paper particles may be obtained by shredding used offce paper, fine wood waste particles may be sawdust generated when a wooden structure is dismantled, disassembled and scrapped and fine fabric waste particles may be obtained from fabric waste cut into a single-fiber state. It is preferred that they are refined to various matters with length of not more than 1mm.

It is desirable to blend these fine natural high molecular waste particles into the multifunctional polyol component (F). Since the specific gravity of the fine natural high molecular waste particles is very close to the specific gravity of the multifunctional polyol component (F), the fine particles are allowed to remain suspended in the liquid without settling or rising to the surface, and the fine waste particles mixed in the multifunctional polyol component can be dispersed uniformly with relative ease. If air is trapped inside the fine natural high molecular waste particles, it will make it difficult to mix and disperse the fine waste particles in the liquid containing the multifunctional polyol component (F). In such a case, the fine natural high molecular waste particles should be deaerated at a lowered pressure level to remove the air and ultimately to facilitate the process of mixing and dispersing.

The fine natural high molecular waste pieces are normally hydrophilic and thus contain a certain level of moisture. Accordingly, as the fine natural high molecular waste pieces are mixed and dispersed in the multifunctional polyol component (F), the water contained in the fine natural high molecular waste particles is added into the multifunctional polyol component (F) to result in an increase in the water content of the multifunctional polyol component (F). For this reason, it is necessary to control the water content of the multifunctional polyol component (F) by factoring in the quantity of water in the fine natural high molecular waste particles mixed in the multifunctional polyol component (F).

A balancing agent, a stabilizer, a coloring agent, a flammable filler and a diluent are added into the two-component reaction curing type urethane liquid resin (D). A hindered phenol oxidation inhibitor or a hindered amine oxidation inhibitor is used as the stabilizer. An organic dye or powdered carbon is an effective coloring agent. A pigment that becomes residual ash through the baking process is not desirable. In addition, no flame retardant should be added. The flammable filler should contain 1 to 10% microballoons or carbon powder. Resin microballoons are fine lightweight particles with a true specific gravity of 0.15 to 0 .50 g/cc and a particle diameter within the range of 15 to 100 µm, and are available as commercial products such as UCAR Phenolic Microballoons (manufactured by Union Carbide) and Matsumoto Microsphere (manufactured by Matsumoto Yushi Pharmaceuticals Co. Ltd.). By using a flammable filler containing resin microballoons, air is embedded into the resin model, which promotes the decomposition, flow out and burn off during the dewaxing and baking processes and reduces the quantity of residual ash. The content of the resin microballoons should be within a range of 0.1 to 10 wt% relative to the weight of the resin model. If the resin microballoons are contained at 10 wt% or higher, the two-component reaction curing type urethane liquid resin (D) becomes grainy and smooth fluidity cannot be achieved. For this reason, the resin microballoons content should be 3 to 8 wt%.

### INDUSTRIAL APPLICABILITY

As explained above, according to the present invention, it becomes possible to manufacture a lot of precious molding parts consisting of titan alloy superior in high strength, heat resistance and corrosion resistance which come to use a lot in an automobile field, an aircraft field, an atomic power field or a space exploitation field. The present invention presents an effective method to further weight-saving required in the aircraft field or the space exploitation field, and makes it possible to manufacture an integral molding parts in which connection between parts is omitted as much as possible.

Thus, the present invention is to make mass-production of titan alloy precious molding parts possible by integrally molding thin complicated shaped model with a hollow part and by manufacturing a mold according that the model is made as a burned-out model, and thus method could not performed by prior arts.

Furthermore, as compared with a prior divisional mold connection method, the present invention has a demerit such that a process for making a mold for forming a core article and manufacturing the core article is added because of integral molding of the thin complicated shaped model with the hollow parts, but has a merit such that a process for connecting a model is deleted. As a result, it is very effective that a manufactured model is seamless, so that a model which has high dimensional accuracy and is reflected faithfully with a design intention can be manufactured. Accordingly, it is certain that a mold or a precious molding manufactured by the model has high accuracy.

## Claims

1. A method for manufacturing a hollow model having a hollow part having at least one opening communicating with an outside, **characterized by** comprising:
a core article forming process comprising a padding forming process for forming a padding made of a foamed material (B) and having a size acceptable to the hollow part and a film forming process for applying a film forming component (A) on the padding in order to form a film having an external form similar to said hollow part;
a hollow model forming process that said core article formed in the core article forming process is set in a mold for forming an external form of the hollow model, two-component reaction rapid curing type urethane liquid resin (D) is injected into an interstice between them to be cured, and then the hollow model having the core article inside thereof is formed by demolding;
a padding removing process that organic solvent (E) is injected into the film comprising the film forming component (A) to dissolve and remove the padding comprising the foaming material (B); and
a film removing process that the film from which the padding was removed is pulled up through the opening to remove.

2. A method for manufacturing a hollow model according to claim 1, **characterized in that** said film forming component (A) is preferably flexible reaction curing urethane for injection with 50 to 90 in Shore hardness A, and said foaming material (B) is preferably expanded polystyrene.

3. A method for manufacturing a hollow model according to claim 1 or 2, **characterized in that** said two-component reaction curing type urethane liquid resin for injection (D) consists of multi-functional polyol component (F), multi-functional polyisocyanate component (G) and a plasticizer (H), and said plasticizer (e) is micro-dispersed through phase separation within 5 minutes of a working life.

4. A method for manufacturing a hollow model according to any one of claims 1 to 3, **characterized in that** said two-component reaction curing type urethane liquid resin (D) has a minute particulate wax component (I) and a very small quantity of moisture (J) at a specific rate to be foamed urethane containing contributed wax minute particles.

5. A precious molding method by a lost wax method **characterized by** using said hollow model manufactured by a method for manufacturing a hollow model according to any one of the claims 1 to 4.

6. A precious molding manufactured by a precious molding method according to claim 5.
